# FASCICULE DE BREVET EUROPEEN

(11) **EP 1 314 607 B1**
(45) Date de publication et mention de la délivrance du brevet: **21.12.2005**
(21) Numéro de dépôt: 01204568.8
(22) Date de dépôt: 27.11.2001
(51) Int. Cl.: B60P 3/34, B60P 3/025

(54) **Auvent déployable à encombrement réduit**
Entfaltbares Schutzdach mit reduziertem Platzbedarf
Deployable awning with reduced space requirement

(43) Date de publication de la demande: 28.05.2003
(73) Titulaire: Société des Produits Nestlé S.A., 1800 Vevey (CH)
(72) Inventeur: Brifault, Nicolas, F- 75013 Paris (FR); Meignen, Dominique, F- 94450 Limeil- Brevannes (FR); Nouyrit, Olivier, F- 92300 Levallois Perret (FR); Rodriguez, Denis, F- 78630 Morainvilliers (FR)
(74) Mandataire: Thérond, Gérard Raymond

(56) Documents cités:
- EP-A- 0 011 041
- EP-A- 0 204 670
- EP-A- 0 881 117
- DE-A- 4 031 562

## Description

La présente invention a pour objet un auvent déployable à partir d'un poste fixe ayant un encombrement réduit à l'état replié tout en pouvant abriter une grande surface à l'état déployé.

Un tel auvent est particulièrement bien adapté à un engin roulant, le poste fixe étant alors le toit d'une remorque, d'une caravane ou d'un véhicule automobile utilitaire léger.

De nombreux types d'auvents ont déjà été proposés, pour augmenter le confort d'une installation, par exemple pour abriter du soleil ou des intempéries les marchandises et/ou la clientèle d'un marchant ambulant.

Le brevet EP 0 011 041 décrit un auvent logé en position repliée dans un coffre occupant la surface arrière d'un véhicule, ledit coffre devant être amené en position horizontale pour permettre, au moyen d'un ensemble complexe de chapes et de compas, le déploiement d'une armature articulée qui va tendre une toile à l'arrière du véhicule et sur un côté en demi-parapluie sur une longueur ne pouvant excéder la hauteur de caisse du véhicule. Un tel auvent nécessite donc des manoeuvres relativement complexes, masque la visibilité arrière, et procure une surface abritée relativement modeste même si elle est satisfaisante pour protéger la porte d'accès à l'intérieur du véhicule lorsque celui-ci est par exemple un camping-car.

Dans le brevet EP 0 204 670, deux axes verticaux, fixés dans les parties supérieure et inférieure d'un coffre situé sur le toit d'une camionnette supportent deux jeux de potences articulées dont les bras sont déployables en parapluie pour tendre une bâche sur tout un côté du véhicule, des vérins permettant en outre de modifier l'inclinaison du coffre, et donc celle de la bâche. Une telle structure est donc relativement lourde et nécessite une installation pratiquement définitive sur le toit du véhicule.

Le brevet EP 0 881 117 décrit un auvent selon le préambule de la revendication 1.

La présente invention vise donc à pallier les inconvénients de l'art antérieur précité en procurant un auvent ayant une structure assez légère et permettant d'abriter une grand surface grâce à une double cinématique de déploiement à partir d'un unique point de pivotement.

A cet effet, l'invention a pour objet un auvent selon la revendication 1 ayant une structure rigide articulée permettant de déployer un habillage souple en dessus d'une surface à abriter à partir d'une zone d'ancrage sur un poste fixe tel que le toit d'un véhicule automobile, d'un camping-car, d'une caravane, voire la surface inférieure d'un toit de terrasse pour agrandir la surface abritée. Cet auvent occupe un volume minimum en position repliée tout en pouvant abriter une grande surface en position déployée grâce à la conception de la structure rigide articulée selon une double cinématique. Cette structure comprend en effet un bras de support monté à rotation dans la zone d'ancrage et des barres pivotées de place en place sur ledit bras de support dont les extrémités libres comportent des moyens de fixation de l'habillage souple telle qu'une toile en PVC.

En position repliée les barres, dont la longueur est supérieure à la longueur du bras de support, sont alignées sensiblement perpendiculairement au bras de support. Après avoir fait pivoter le bras de support jusqu'au bord du poste fixe, les barres peuvent être déployées en éventail.

Selon une autre caractéristique préférée de l'invention, l'espacement des extrémités des barres est maintenue au moyen d'un boudin gonflable. On obtient ainsi un auvent procurant une grande surface abritée tout en étant léger et facile à manipuler.

D'autres caractéristiques et avantages de la présente invention apparaîtront plus clairement à la lecture de la description d'un auvent solidaire du toit d'un véhicule utilitaire léger, pris à titre d'exemple illustratif et non limitatif, en référence aux dessins annexés dans lesquels :
- la figure 1 représente une vue côté conducteur d'un véhicule équipé d'un auvent selon l'invention replié dans un coffre;
- la figure 2 représente une vue côté passager correspondant à la figure 1 lorsque l'auvent est déployé;
- la figure 3 représente une vue de face avec l'auvent déployé;
- la figure 4 représente une vue de dessus de la structure articulée de l'auvent en position repliée;
- la figure 5 représente une vue de dessus de la même structure qu'à la figure 4 en cours de déploiement;
- la figure 6 représente, en vue de dessus, l'auvent selon l'invention, entièrement déployé, et
- la figure 7 représente, en vue de dessus, un autre mode de réalisation d'un auvent selon l'invention entièrement déployé.

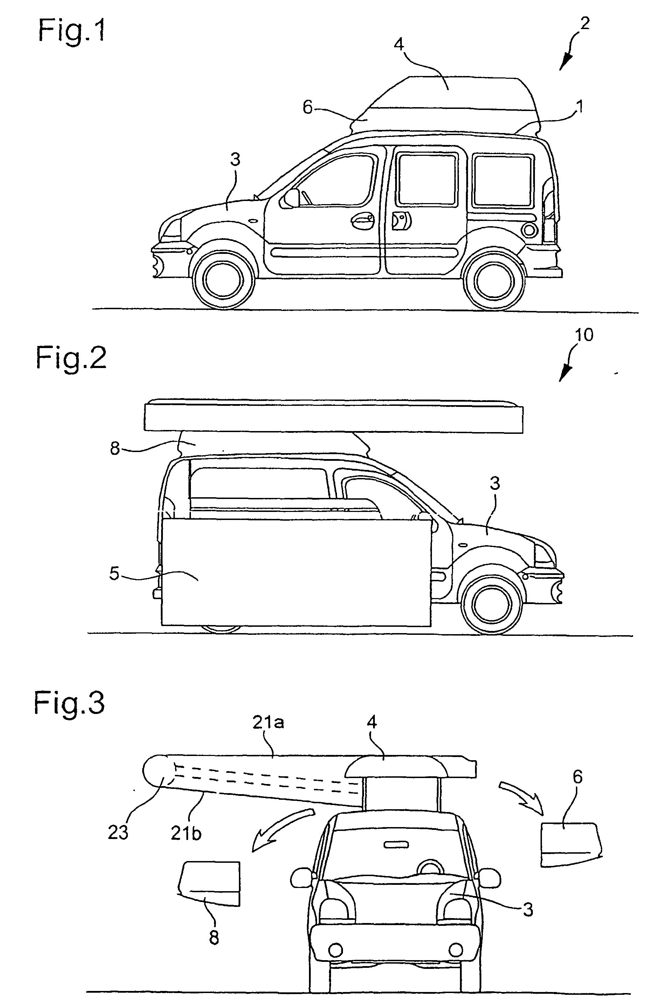

Dans l'exemple illustratif choisi, on voit que le poste fixe est le toit 1 d'un véhicule utilitaire léger 3, représenté à la figure 1 côté conducteur avec l'auvent 10 replié dans un coffre 2 comprenant un couvercle 4 et deux coquilles côté conducteur 6 et côté passager 8 amovibles. A la figure 2, le même véhicule 3 est représenté côté passager avec l'auvent 10 en position déployée, avec une représentation schématique d'un étal 5 installé au droit des portières du véhicule 3 ouvertes côté passager. La figure 3 représente ce même véhicule, l'étal étant non encore installé, les parties en pointillés étant une structure articulée qui sera décrite plus loin.

On observera que l'auvent 10 reste déployé sans avoir aucune liaison avec le sol susceptible de gêner le client, ce qui permet aussi d'avoir une vue totalement dégagée sur l'étal et de rendre plus convivial l'échange client-commerçant. Un véhicule équipé d'un tel auvent est par exemple celui d'un marchand de pizzas, de glaces, ou autres, devant se déplacer pour vendre ses produits.

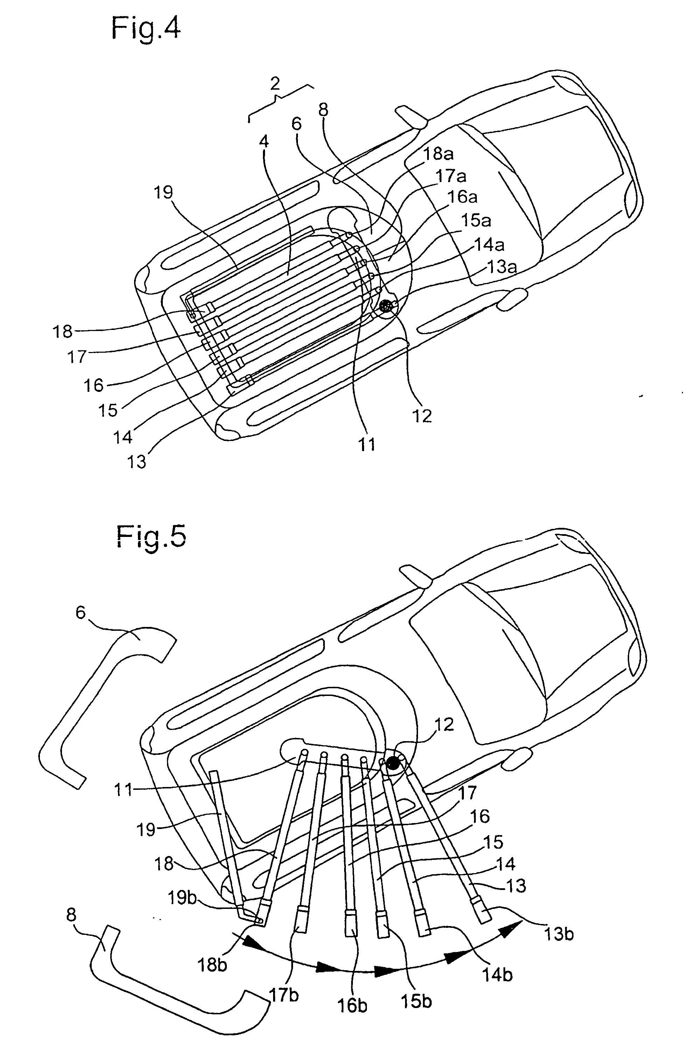

Les figures 4, 5 et 6 vont maintenant permettre d'expliquer les avantages, la structure et le déploiement / repliement de l'auvent selon l'invention.

Dans la vue de dessus représentée à la figure 4, où l'auvent est entièrement replié dans le coffre, pour une meilleure compréhension on a supposé que le couvercle 4 et les coquilles amovibles 6, 8 du coffre 2 étaient transparentes. On voit alors que six barres référencées 13 à 18 sont alignées parallèlement au sens de la longueur du coffre en ayant chacune un point de pivotement 13a à 18a sur un bras de support 11, ayant la forme d'un plateau allongé orienté selon la largeur du coffre 2. Dans cet exemple, il est bien évident que selon la largeur du coffre et la forme de l'auvent on peut avoir plus de six barres, ou au contraire moins de six barres. Le bras de support 11 est monté à rotation sur une zone d'ancrage 12 située au niveau d'un angle du coffre, au dessus de la place passager. Cette zone d'ancrage 12 peut être ménagée directement dans le toit 1 du véhicule ou dans le plancher du coffre 2 qui sera alors assujetti par des moyens connus, telles que des barres porte-bagages, au toit 1 du véhicule. Pour des raisons qui seront comprises plus loin, le bras de support 11 est incliné ou inclinable par rapport à l'horizontale, par exemple au moyen d'une charnière ou d'une rotule verrouillable. On voit enfin que la barre 18 la plus éloignée du point d'ancrage 12 comporte à son extrémité une articulation 19a pour une autre barre 19 coudée pour être alignée parallèlement aux autres barres en position repliée et être déployée dans le sens indiqué par la flèche, comme expliqué maintenant en référence à la figure 5.

Pour installer l'auvent 10, on dépose d'abord les coquilles latérales 6, 8 du coffre 2, puis on fait pivoter le bras de support 11 jusqu'à ce que les barres 13 à 18 et 19 s'étendent au-delà des portières du véhicule côté passager.

Dans une phase (non représentée) le bras de support 11 arrive en butée dans une orientation parallèle à la longueur du coffre 2 et l'extrémité libre du bras articulé 19 est fixée à un élément 19b du coffre 2 ou du toit 1 pour immobiliser le bras de support 11. Dans un mode de réalisation le plus simple (non représenté) il suffit alors de tendre un habillage souple au dessus des barres 13 à 18 et 19 entre des points de fixation prévus sur le couvercle 4 du coffre 2 et les extrémités 13b à 18b des barres 13 à 18, en rendant ledit habillage souple 21 solidaire desdites extrémités 13b à 18b par exemple au moyen de sangles. Par "habillage souple" on entend par exemple une toile en PVC.

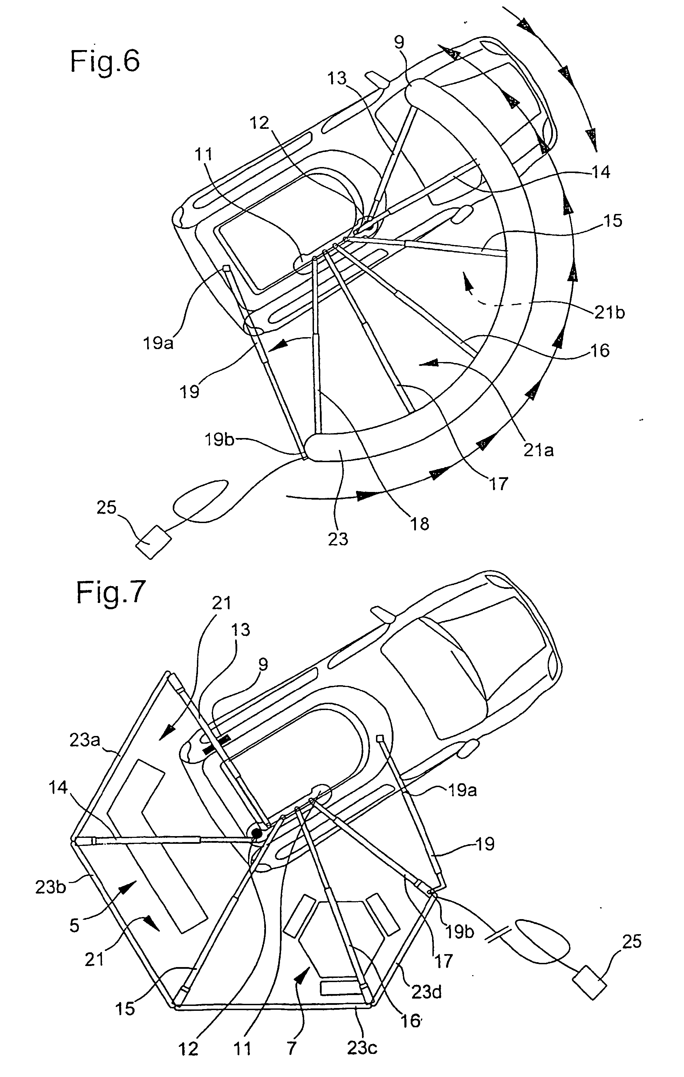

Dans la description qui précède on a supposé que les barres 13 à 18 et 19 étaient des barres simples, ce qui procure une surface abritée déjà supérieure à celle qui serait obtenue avec un dispositif non pourvu de cette double cinétique, et comprenant par exemple des barres rangées perpendiculairement à la longueur du coffre lorsque l'auvent est replié. Pour avoir, avec l'auvent selon l'invention, une surface abritée encore plus grande il est possible d'utiliser des barres 13 à 18 et 19 télescopiques, ce qui offre en outre l'avantage de procurer une grande liberté dans la géométrie de la toile devant être tendue, comme expliqué ci-après, en référence aux figures 6 et 7.

La figure 6 représente l'auvent entièrement déployé et dont la structure articulée à double cinématique a été décrite en référence aux figures 1 à 5. On voit que le bord de l'auvent 10 est en arc de cercle. On voit aussi que les extrémités 13b à 18b des barres télescopiques 13 à 18 supportent un boudin gonflable 23 solidaire de la toile 21 qui va permettre, au moyen d'une station de gonflage 25 de tendre très facilement toute la structure et la toile 21. Dans le mode de réalisation représenté, la toile abrite toute une surface côté passager et recouvre partiellement l'avant du véhicule pour être fixée côté conducteur en un point 9.

Sur la figure 3, on voit que la toile 21 se compose d'une partie 21a passant au dessus des barres 13 à 18 et d'une partie 21 b passant en dessous, les deux parties 21 a, 21 b ayant leurs bords libres amarrés à des organes de fixation au coffre. Cette conception permet non seulement de rendre l'auvent 10 plus esthétique en masquant les barres 13 à 18 et 19, mais contribue aussi à renforcer la structure en limitant les tensions verticales pouvant s'exercer sur lesdites barres, par exemple sous l'effet du vent ou de la pluie évitant ainsi l'utilisation de renforts du type haubans ou poteaux gênant le passage et compliquant l'installation. En ce qui concerne la pluie, on donnera à l'auvent une inclinaison de préférence opposée à son ouverture, c'est-à-dire dans ce cas côté conducteur. On observera également que cette conception permet d'avoir une construction plus légère et plus facile à monter qu'en utilisant, comme cela apparaîtrait logique des arceaux métalliques pour obtenir un bord de toile arrondi pouvant suggérer le type de produit vendu par le marchand ambulant, par exemple des pizzas.

Un avantage supplémentaire de l'auvent selon la présente invention réside dans sa facilité et sa rapidité d'installation et aussi de désinstallation. En effet, la toile 21 recouvrant les barres 13 à 18 étant tendue par le gonflage, cela permet d'obtenir rapidement et aisément une structure volumineuse d'apparence suggestive. Aussi, dès que le maintien de la pression d'air dans le boudin gonflable 23 est stoppé, l'auvent constitué perd ainsi instantanément son volume. La toile 21 est aisément ôtée, les barres 13 à 18 sont repliées et le bras de support 11 pivoté dans le coffre 2.

A la figure 7 on a représenté un autre auvent selon l'invention qui diffère de celui qui vient d'être décrit par certaines variantes de réalisation.

On observera d'abord que la zone d'ancrage 12 de la structure articulée à double cinématique est positionnée à l'arrière du coffre, derrière la place passager, et que le bras de support 11 comporte cinq barres télescopiques 13 à 17 permettant de déployer une toile 21 selon un contour partiellement hexagonal. La position de la zone d'ancrage 12 permet de déployer l'auvent 10 à l'arrière du véhicule où peut être installé un étal 5, ainsi que sur une partie côté passager où peuvent être placées une ou plusieurs tables 7. L'espacement des barres 13 à 17 est obtenu au moyen d'un enchaînement de petits boudins 23a à 23d reliés les uns aux autres, gonflés une fois pour toute, par exemple avec une bonbonne de gaz comprimé, ou maintenus sous pression en permanence, par exemple au moyen d'un compresseur 25 alimenté par des batteries. Comme dans le mode de réalisation précédent la tension de la toile 21 (supposée d'une couleur pâle transparente) est également assurée par une barre supplémentaire 19 articulée en 19b sur le bras 17 et en 19a sur le coffre. A l'autre extrémité de l'auvent, ie bras 13 est immobilisé dans un dispositif de clipsage 9 solidaire du coffre 2. La forme de cet auvent peut suggérer au client que le marchand vend du miel ou des produits à base de miel.

Il est bien évident que cette position du point d'ancrage 12 serait tout aussi valable pour le premier mode de réalisation décrit. De même, le point d'ancrage 12 pourrait être prévu dans les deux autres angles du coffre pour un véhicule ayant la conduite à gauche. Sans sortir du cadre de l'invention, l'homme de métier peut donner au contour de la toile 21 d'autres formes pour suggérer le genre de produit vendu, par exemple une forme en portion d'étoile pour des produits de la mer. Il est également possible de prévoir sur le bord de l'auvent la fixation d'une banderole donnant une information encore plus explicite sur les produits vendus.

La description précédente a été faite en référence à un véhicule utilitaire léger, tel qu'un véhicule monospace, mais l'homme de métier peut, sans sortir du cadre de l'invention, adapter l'auvent à un engin roulant plus important par exemple en augmentant le nombre de barres.

## Revendications

1. Auvent déployable au dessus d'une surface à abriter à partir d'une zone d'ancrage (12) sur un poste fixe (1), ledit auvent comprenant une structure rigide articulée coopérant avec un habillage souple (21) ayant au moins un côté solidaire du poste fixe (1), ladite structure rigide articulée possédant une double cinématique formée par un bras de support (11), monté à rotation dans la zone d'ancrage (12) et par des barres (13 à 18) pivotables sur ledit bras de support (11), **caractérisé en ce que** l'habillage souple (21) est de type enveloppant en étant formé de deux parties (21a, 21b) se recouvrant, l'une (21a) passant au dessus des barres (13 à 18), l'autre (21b) passant en dessous, les deux bords libres des deux parties (21a, 21b) étant fixés au poste fixe (1).

2. Auvent selon la revendication 1, **caractérisé en ce que** l'habillage souple (21) est en outre solidaire d'au moins un boudin gonflable (23, 23a-23d) au droit des moyens de fixation aux barres (13-18).

3. Auvent selon la revendication 2, **caractérisé en ce que** le boudin gonflable (23) est formé d'un seul élément permettant de tendre l'habillage souple (21) en arc de cercle.

4. Auvent selon la revendication 2, **caractérisé en ce que** le boudin gonflable (23a-23d) est formé de plusieurs éléments, communiquant entre eux et permettant de tendre l'habillage souple selon un contour polygonal.

5. Auvent selon la revendication 1, **caractérisé en ce que** le boudin (23, 23a-23d) est relié en permanence à une station de gonflage (25) lorsque l'auvent est déployé.

6. Auvent selon la revendication 1, **caractérisé en ce que** les barres (13-18) de la structure rigide sont télescopiques.

7. Auvent selon la revendication 1, **caractérisé en ce que** la structure rigide comporte en outre des moyens d'immobilisation du bras de support (11) dans une position donnée.

8. Auvent selon la revendication 7, **caractérisé en ce qu'**un des moyens d'immobilisation du bras de support (11) consiste en une barre (19) dont une extrémité (91 b) est articulée à l'extrémité de la dernière barre pivotée sur ledit bras de support (11) et dont l'autre extrémité est rendue solidaire d'un point de fixation (19a) du poste fixe (1).

9. Auvent selon la revendication 1, **caractérisé en ce que** le poste fixe (1) est le toit d'un véhicule automobile (3) ou un coffre (2) solidaire de celui-ci, et **en ce que** le point d'ancrage (12) est prévu dans un angle du toit ou du coffre (2).

10. Auvent selon la revendication 9, **caractérisé en ce que** le bras de support (11) est orienté selon la largeur du toit ou du coffre (2) et les barres sont orientées selon la longueur lorsque la structure articulée est repliée.

## Patentansprüche

1. Vordach, das über einer zu beschirmenden Oberfläche ausgehend von einer Verankerungszone (12) an einer festen Stütze (1) ausklappbar ist, wobei das Vordach eine angelenkte starre Struktur umfasst, die mit einer elastischen Verkleidung (21) zusammenwirkt, die wenigstens eine mit der festen Stütze (1) fest verbundene Seite besitzt, wobei die angelenkte starre Struktur eine kinematische Doppelstruktur besitzt, die aus einem Tragarm (11), der in der Verankerungszone (12) drehbar angebracht ist, und aus Stäben (13 bis 18), die an dem Tragarm (11) schwenkbar sind, gebildet ist, **dadurch gekennzeichnet, dass** die elastische Verkleidung (21) vom umhüllenden Typ ist, indem sie aus zwei Teilen (21a, 21b), die sich gegenseitig überdecken, gebildet ist, wobei einer (21a) über den Stäben (13 bis 18) und der andere (21b) darunter verläuft, wobei die zwei freien Kanten der zwei Teile (21 a, 21 b) an der festen Stütze (1) befestigt sind.

2. Vordach nach Anspruch 1, **dadurch gekennzeichnet, dass** die elastische Verkleidung (21) außerdem am Ort der Mittel für die Befestigung an den Stäben (13-18) mit wenigstens einem aufblasbaren Wulst (23, 23a-23d) fest verbunden ist.

3. Vordach nach Anspruch 2, **dadurch gekennzeichnet, dass** der aufblasbare Wulst (23) aus einem einzigen Element gebildet ist, der ermöglicht, die elastische Verkleidung (21) in einem Kreisbogen zu spannen.

4. Vordach nach Anspruch 2, **dadurch gekennzeichnet, dass** der aufblasbare Wulst (23a-23d) aus mehreren Elementen gebildet ist, die miteinander in Verbindung stehen und ermöglichen, die elastische Verkleidung längs eines polygonförmigen Umrisses zu spannen.

5. Vordach nach Anspruch 1, **dadurch gekennzeichnet, dass** der Wulst (23, 23a-23d) ständig mit einer Aufblasstation (25) verbunden ist, wenn das Vordach ausgeklappt ist.

6. Vordach nach Anspruch 1, **dadurch gekennzeichnet, dass** die Stäbe (13-18) der starren Struktur Teleskopstäbe sind.

7. Vordach nach Anspruch 1, **dadurch gekennzeichnet, dass** die starre Struktur außerdem Mittel umfasst, die den Tragarm (11) in einer gegebenen Stellung unbeweglich machen.

8. Vordach nach Anspruch 7, **dadurch gekennzeichnet, dass** eines der Mittel, die den Tragarm (11) unbeweglich machen, aus einem Stab (19) besteht, wovon ein Ende (91b) am Ende des letzten Stabs, der an dem Tragarm (11) schwenkbar ist, angelenkt ist und wovon das andere Ende an einem Befestigungspunkt (19a) der festen Stütze (1) festgehalten wird.

9. Vordach nach Anspruch 1, **dadurch gekennzeichnet, dass** die feste Stütze (1) das Dach eines Kraftfahrzeugs (3) oder eines damit verbundenen Dachkoffers (2) ist und dass der Verankerungspunkt (12) in einer Ecke des Dachs oder des Dachkoffers (2) vorgesehen ist.

10. Vordach nach Anspruch 9, **dadurch gekennzeichnet, dass** der Tragarm (11) in Richtung der Breite des Dachs oder des Dachkoffers (2) orientiert ist und die Stäbe in Richtung der Länge orientiert sind, wenn die angelenkte Struktur zusammengeklappt ist.

## Claims

1. Deployable awning above a surface to be sheltered from an anchoring zone (12) on a fixed post (1), said awning including a hinged rigid structure cooperating with a flexible cover (21) having at least one side secured to the fixed post (1), said rigid hinged structure having double kinematics formed by a support arm (11), rotatably mounted in the anchoring zone (12) and by pivotable bars (13 to 18) placed on said support arm (11), **characterised in that** the flexible cover (21) is of the enveloping type being formed by two parts (21 a, 21 b) covering each other, one of them (21 a) passing above the bars (13 to 18), the other (21 b) passing below, the two free edges of the two parts (21 a, 21 b) being secured to the fixed post (1).

2. Awning according to claim 1, **characterised in that** the flexible cover (21) is further secured to at least one inflatable ring (23, 23a-23d) opposite to the means securing it to the bars (13 -18).

3. Awning according to claim 2, **characterised in that** the inflatable ring (23) is formed of a single element for extending the flexible cover (21) in the arc of a circle.

4. Awning according to claim 2, **characterised in that** the inflatable ring (23a-23d) is formed of several elements, communicating with each other and for extending the flexible cover along a polygonal contour.

5. Awning according to claim 1, **characterised in that** the ring (23, 23a-23d) is permanently connected to an inflating station (25) when the awning is being deployed.

6. Awning according to claim 1, **characterised in that** the bars (13-18) of the rigid structure are telescopic.

7. Awning according to claim 1, **characterised in that** the rigid structure further includes means for immobilising the support arm (11) in a given position.

8. Awning according to claim 7, **characterised in that** one of the means for immobilising the support arm (11) consists of a bar (19) one end (91b) of which is hinged to the end of the last bar pivoted on said support arm (11) and the other end of which is secured to an attachment point (19a) of the fixed post (1).

9. Awning according to claim 1, **characterised in that** the fixed post (1) is the roof of a motor vehicle (3) or a box (2) secured thereto, and **in that** the anchoring point (12) is provided in a comer of the roof or the box (2).

10. Awning according to claim 9, **characterised in that** the support arm (11) is oriented along the width of the roof or box (2) and the bars are oriented along the length when the hinged structure is folded.
